# EUROPÄISCHE PATENTSCHRIFT

(11) **EP 1 592 870 B1**
(45) Veröffentlichungstag und Bekanntmachung des Hinweises auf die Patenterteilung: **24.06.2015**
(21) Anmeldenummer: 04708365.4
(22) Anmeldetag: 05.02.2004
(51) Int. Cl.: F02C 7/143, F02C 9/54, F02C 7/057, F02C 9/28

(54) **VERFAHREN ZUM BETRIEB EINER GASTURBOGRUPPE**
METHOD FOR OPERATING A GAS TURBINE GROUP
PROCEDE POUR FAIRE FONCTIONNER UN ENSEMBLE TURBINE A GAZ

(30) Priorität: 11.02.2003 CH 2072003
(43) Veröffentlichungstag der Anmeldung: 09.11.2005
(73) Patentinhaber: ALSTOM Technology Ltd, 5400 Baden (CH)
(72) Erfinder: HOFFMANN, Jürgen, CH-5417 Untersiggenthal (CH); MCKAY, Tom, Alexander, Odin, CH-5408 Ennetbaden (CH); KURZ, Nikolaus, Herbert, 88662 Überlingen (DE); SPITZMUELLER, Tobias, CH-5408 Ennetbaden (CH)
(74) Vertreter: Alstom Technology Ltd
(86) Internationale Anmeldenummer: PCT/EP2004/050086
(87) Internationale Veröffentlichungsnummer: WO 2004/072453

(56) Entgegenhaltungen:
- US-A1- 2001 039 794
- US-A1- 2002 139 105
- US-B1- 6 357 236

## Beschreibung

### Technisches Gebiet

Die vorliegende Erfindung betrifft ein Verfahren zum Betrieb einer Gasturbogruppe gemäss dem Oberbegriff des Anspruchs 1.

### Stand der Technik

Aus US 5,353,585 ist ein Verfahren bekanntgeworden, vor dem Verdichter einer Gasturbogruppe vernebeltes Wasser in den Ansaugluftstrom einzubringen. Durch Verdunstungskühlung steigen die Dichte der Ansaugluft, und damit der Arbeitsmittelmassenstrom und die maximal erreichbare Leistung der Gasturbogruppe.

In US 6,216,443 wird vorgeschlagen, Wasser derart einzuspritzen, dass Flüssigkeitstropfen in den Verdichter eintreten. Die Tropfen verdunsten innerhalb des Verdichters, während des Verdichtungsprozesses, was zu einer intensiven Innenkühlung des Verdichters führt. Neben dem massenstromerhöhenden Effekt der Verdunstungskühlung vor dem Verdichter verringert sich dadurch auch die Leistungsaufnahme des Verdichters, und es verringert sich die Verdichterendtemperatur, womit in einer anschliessenden Brennkammer stärker gefeuert werden kann. In der Summe resultiert daraus eine Steigerung der erreichbaren Maximalleistung der Gasturbogruppe, welche ja in erster Linie durch den Arbeitsmittel-Massenstrom und die zulässige Turbineneintrittstemperatur begrenzt ist.

Aus der US 6,012,279 ist weiterhin bekannt, zwischen zwei Teilverdichtern Flüssigkeit einzuspritzen. Dies bewirkt ebenfalls eine Kühlung des Arbeitsmittels einerseits zwischen den Verdichtungsschritten im ersten und zweiten Teilverdichter, andererseits auch während des zweiten Verdichtungsschrittes.

Die Flüssigkeitseinspritzung in einen Verdichter wird derzeit in der Fachwelt mit unterschiedlichen Begriffen belegt, wie "High Fogging", "Overfogging", "Wet Compression", "Overspray Cooling". Festzustellen bleibt, dass die positiven Effekte an sich jedenfalls schon lange bekannt ist, wie besipielsweise die FR 1.563,749 zeigt. Die Verdunstung einer Flüssigkeit im Arbeitsmittel während der Verdichtung bietet bei vergleichsweise geringem apparativem Aufwand eine recht gute Annäherung an eine isotherme Verdichtung.

Zur Kühlung des Arbeitsmittels ist weiterhin die Verwendung von Wärmetauschern als Zwischenkühler bekannt, oder auch die Verwendung von Kältemaschinen zur Kühlung der Ansaugluft.

Zwischenkühler in Verdichtern werden häufig im gesamten Betriebsbereich mit voller Kühlleistung betrieben. Moderne Gasturbogruppen laufen dann in weiten Lastbereichen weitab vom an sich günstigen Auslegungspunkt.

Die US 6,216,443 schlägt vor, die Flüssigkeitseinspritzung erst dann in Betrieb zu nehmen, wenn die Gasturbogruppe ohne Wassereinspritzung bereits auf Volllast betrieben wird, und die Soll-Leistung immer noch höher ist als die tatsächlich abgegebene Nutzleistung. Das heisst, die Gasturbogruppe selbst wird mit dem maximalen Eintrittsvolumenstrom des Verdichters betrieben, und die Turbineneintrittstemperatur ist auf dem maximal zulässigen Wert. Zur weiteren Leistungssteigerung wird die Kühlung des Arbeitsmittels durch die Einspritzung von Flüssigkeit in den Verdichter verwendet. Gemäss dem dort vorgeschlagenen Verfahren wird zunächst der notwendige Einspritz-Wassermassenstrom als Funktion der zusätzlich zu erbringenden Nutzleistung bestimmt und eingespritzt. Damit weicht die Gasturbogruppe vom Volllastpunkt ab, und die Brennstoffzufuhr wird sukzessive erhöht, bis die Gasturbogruppe wieder im Volllastbetrieb, das mit heisst maximal zulässiger Turbineneintrittstemperatur und gegebenenfalls vollständig geöffneter Vorleitreihe, arbeitet.

Es zeigt sich jedoch in der Praxis, dass es rund 0.5 bis 2 Sekunden dauern kann, bis die Wassertropfen vom Einspritzort bis zum Kompressoreintritt gelangt sind. Ebenso verzögern bei den in Gasturbogruppen häufig angewendeten Regelungs-und Steuerungsmechanismen die Durchströmungszeiten der Komponenten die Erfassung der durch die Wassereinspritzung bewirkten Temperaturveränderungen und damit auch deren Wirkung auf die Brennstoffzufuhr. Es zeigt sich also, dass die Wassereinspritzung nur verzögert wirksam wird. Ebenso ist eine beliebig schnelle Zuschaltung und Steigerung der eingespritzten Wassermenge nicht realisierbar. Hinzu kommt, dass die oben beschriebenen Totzeiten und Verzögerungszeiten einer Regelstrecke die Stabilität eines Regelkreises vermindern, derart, dass die mögliche Reaktionsgeschwindigkeit stark herabgesetzt ist. Zusammenfassend ist also die Verwendung von Massnahmen zur Kühlung des Arbeitsmittels während der Verdichtung, und besonders die Wassereinspritzung vor dem Verdichter, für schnelle Leistungssteigerungen nicht unbegrenzt verwendbar.

Aus der Druckschrift US-B1-6,357,236 sind eine Gasturbine, ein Kombikraftwerk und ein Verdichter bekannt, bei denen stromaufwärts vom Verdichter eine Vorrichtung zum Eindüsen von Flüssigkeitströpfchen vorgesehen ist, die zur Kühlung der Ansaugluft verwendet wird. Zur Leistungserhöhung wird stets zunächst die Kühlung der Ansaugluft erhöht und dann erst die Brennstoffmenge erhöht. Hierdurch ist die Reaktionsgeschwindigkeit bei der Leistungsanpassung wiederum begrenzt.

Die Druckschrift US-A1-2002/0139105 beschreibt generell die Leistungserhöhung ("power augmentation") einer Gasturbine durch Einspritzen von Wasser in den Ansaugkanal des Verdichters. Auch in diesem Fall ist die Reaktion der Anlage auf geänderte Leistungsanforderungen durch die Ansaugluftkühlung bestimmt..

### Darstellung der Erfindung

Hier will die Erfindung Abhilfe schaffen. Der in den Ansprüchen gekennzeichneten Erfindung liegt die Aufgabe zugrunde, ein Verfahren der eingangs genannten Art anzugeben, welches die Nachteile des Standes der Technik vermeidet. Das Verfahren soll es insbesondere ermöglichen, auf Leistungsanforderungen an eine Gasturbogruppe, die eigentlich oberhalb von deren Grund-Volllastleistung liegen, sehr schnell bis praktisch verzögerungsfrei zu reagieren. Unter der Grund-Volllastleistung der Gasturbogruppe ist in diesem Zusammenhang die Nutzleistung zu verstehen, welche die Gasturbogruppe bei den jeweiligen Umgebungsbedingungen, wobei gerade die Umgebungstemperatur und der Umgebungsdruck einen grossen Einfluss haben, ohne die Wassereinspritzung oder eine sonstige variable, nicht permanent betriebene Kühlung zu erbringen in der Lage ist.

Erfindungsgemäss wird diese Aufgabe unter Verwendung der Gesamtheit der Merkmale des Anspruchs 1 gelöst.

Kern der Erfindung ist es demnach, bei Leistungsanforderungen, die nahe der Grund-Volllastleistung der Gasturbogruppe oder darüber liegen, die Vollastleistung durch die Kühlung des Arbeitsmittels vor der Verdichtung und/oder während der Verdichtung und/oder zwischen zwei Verdichtungsschritten derart zu vertrimmen, dass die Gasturbogruppe immer unterhalb der Volllastleistung betrieben wird. Unter der Vollastleistung ist hierbei die Nutzleistung zu verstehen, welche sich ergibt, wenn ein Prozessparameter, wie zum Beispiel die Turbineneintrittstemperatur - respektive, im Falle einer Gasturbogruppe mit sequenzieller Verbrennung, alle Turbineneintrittstemperaturen - oder auch die Verdichterendtemperatur oder der Verdichterendruck einen maximal zulässigen Wert erreicht, wobei gleichzeitig der Ansaugvolumenstrom des Verdichters maximal ist. Der Ansaugvolumenstrom wird bei einer Gasturbogruppe mit verstellbarer Vorleitreihe im Wesentlichen durch die Stellung der Vorleitreihe bestimmt; der maximale Eintrittsvolumenstrom ist in diesem Falle gleichbedeutend mit einer voll geöffneten Vorleitreihe. Es versteht sich von selbst, dass bei einer Gasturbogruppe mit sequentieller Verbrennung, wie sie aus EP 620362 oder US 5,454,220 bekannt ist, für die Definition des Vollastbetriebes die Turbineneintrittstemperaturen aller Turbinen auf dem jeweils zulässigen Maximalwert liegen. Wie eingangs dargelegt, steigt die in dem so definierten Betriebspunkt abgegebene Leistung, wenn eine Kühlung des Arbeitsmittels vor oder während des Verdichtungsprozesses erfolgt, und zwar einerseits durch einen steigenden Massenstrom des Arbeitsmittels aufgrund der Kühlung vor dem Verdichter, und aufgrund der abnehmenden spezifischen Verdichter-Leistungsaufnahme bei Kühlung während der Verdichtung. Weiterhin wird die Verdichterendtemperatur gesenkt, so, dass mehr Wärme zugeführt werden kann, wodurch die Vollastleistung ansteigt. Insbesondere, wenn vor dem Verdichtereintritt ein Flüssigkeitsnebel so in das Arbeitsmittel eingespritzt wird, dass Flüssigkeitstropfen in den Verdichter eindringen, werden durch die Verdunstungskühlung beide Effekte genutzt. Indem auf diese Weise die Volllastleistung jeweils so eingestellt wird, dass die Gasturbogruppe unterhalb der Volllastleistung betrieben wird, wird eine schnell aktivierbare Leistungsreserve bereitgestellt. Dies ermöglicht es, auf schnelle Leistungsanforderungen auf einfache Weise praktisch verzögerungsfrei zu reagieren, da die Gasturbogruppe selbst durch das Vertrimmen der Volllast-Leistung immer so betrieben wird, dass sie Leistungsreserven aufweist, welche unmittelbar durch eine Erhöhung der Wärmezufuhr zum verdichteten Arbeitsmittel, bei einer im offenen Prozess arbeitenden Gasturbogruppe also durch Erhöhen der Brennstoffzufuhr zu einer Brennkammer, mobilisiert werden können. Das heisst, dass bei schnellen Änderungen der Leistungsanforderungen, wie sie typischerweise bei Über- oder Unterfrequenz auftreten, nicht zwischen dem Betrieb mit und ohne Kühlung unterschieden werden muss.

Anders ausgedrückt kann auch gesagt werden, dass die Kühlung der Ansaugluft oder die Zwischenkühlung der Luft nicht verwendet wird, um primär die Leistung der Gasturbogruppe auf einen Sollwert einzustellen, welcher über der Grund-Volllastleistung liegt, oder um die Nutzleistungsabgabe zu verändern, sondern dass die Kühlung gemäss der Erfindung verwendet wird, um den Volllastpunkt zu vertrimmen, also tatsächlich den Gasturbinenprozess in einem anderen Bezugssystem aufzuhängen.

Zur Kühlung des Arbeitsmittels wird in einer bevorzugten Verfahrensvariante des erfindungsgemässen Verfahrens stromauf des Verdichtereintritts eine Flüssigkeit, insbesondere Wasser, eingespritzt. Dieses bewirkt durch die Verdunstung eine Kühlung des Arbeitsmittelmassenstroms vor der Verdichtung. Wenn Flüssigkeit in den Verdichter eindringt- sei es, weil der Einspritzort sehr nahe am Verdichtereintritt liegt, oder, weil die Einspritzmenge so gross ist, dass das Arbeitsmedium am Verdichtereintritt übersättigt ist-bewirkt die eindringende Flüssigkeit weiterhin eine Kühlung während der Verdichtung. Die eingebrachte Flüssigkeitsmenge ist hierbei ein Mass für die Kühlungsleistung.

In einer Ausführungsform der Erfindung wird die Vollast-Leistung bestimmt, indem eine Referenz-Volllastleistung, welche beispielsweise für ISO-Umgebungsbedingungen, das heisst 15°C Lufttemperatur, 1013 hPa, und 60% relative Luftfeuchte, spezifiziert wird, mit entsprechenden Korrekturtermen umgerechnet wird, welche Abweichungen von Umgebungsdruck, -temperatur, und -feuchte von den Standardbedingungen berücksichtigen. Derartige Umrechnungen sind dem Fachmann geläufig, und die Hersteller von Gasturbinen spezifizieren die entsprechenden Korrekturterme für ihre unterschiedlichen Maschinentypen. Weiterhin wird bei der Berechnung die Kühlungsleistung in Betracht gezogen. Auch hier ist die Ermittlung entsprechender maschinenspezifischer Korrekturformeln dem Fachmann geläufig.

In einer Ausführungsform der Erfindung wird die Kühlungsleistung so eingestellt, dass die Turbineneintrittstemperatur um einen bestimmten Wert unterhalb der maximal zulässigen Turbineneintrittstemperatur liegt. Es erfolgt also eine Regelung der Kühlungsleistung auf einen Sollwert der Turbineneintrittstemperatur, welcher unterhalb der maximal zulässigen Turbineneintrittstemperatur liegt.

Eine weitere Ausführungsform der Erfindung kommt bevorzugt zur Anwendung, wenn die Gasturbogruppe wenigstens eine verstellbare Vorleitreihe aufweist, und das Betriebskonzept der Gasturbogruppe vorsieht, die Stellung der Vorleitreihe so zu regeln, dass die Turbineneintrittstemperatur auch unterhalb der Vollast-Leistung auf dem Maximalwert bleibt. Die Kühlungsleistung kann dann so geregelt werden, dass eine bestimmte Vorleitreihenstellung als Zielwert anliegt. Es erfolgt eine Regelung der Kühlungsleistung auf einen Sollwert der Vorleitreihenstellung, bei welchem der Eintrittsvolumenstrom des Verdichters kleiner ist als der maximal mögliche bei voll geöffneter Vorleitreihe.

In einer weiteren Ausführungsform wird aus der Ist-Nutzleistung der Gasturbogruppe und der wie oben beschrieben ermittelten Volllast-Leistung eine Ist-Relativleistung ermittelt. Die Kühlungsleistung wird so eingestellt, und damit die Volllast-Leistung verändert, dass der Relativleistungs-Istwert bei konstanter Ist-Nutzleistung auf einen Sollwert eingeregelt wird. Es erfolgt also eine Regelung der Kühlungsleistung auf eine Volllast-Leistung, bei der die Ist-Nutzleistung um einen bestimmten Prozentsatz unterhalb der der Vollast-Leistung liegt Der Relativleistungs-Istwert wird durch Vertrimen der Vollast-Leistung auf einen Relativleistungs-Sollwert eingeregelt, der unterhalb 100% liegt, insbesondere im Bereich von 90% bis 95%. In einer weiteren Verfahrensvariante wird die Volllastleistung mittels der Kühlung einen bestimmten Absolutwert, beispielsweise 10 MW, grösser als der Nutzleistungs-Sollwert eingestellt.

Ganz besonders von Vorteil ist es, ein Totband um den Sollwert zu definieren, innerhalb dessen keine Eingriffe auf die Kühlungsleistung vorgenommen werden. Vorstellbar wäre beispielsweise ein Verfahren bei der der Relativleistungs-Sollwert 90% beträgt, mit einem Totband von ± 5%. Ein Regeleingriff erfolgt erst dann, wenn die Ist-Relativleistung unter 85% sinkt oder über 95% steigt. Dies gewährleistet grundsätzlich eine schnell mobilisierbare Leistungsreserve von wenigstens 5% der Volllast-Leistung. Das breite Totband trägt Gewähr dafür, dass die Regelung nicht übernervös reagiert, und die Anzahl der Regeleingriffe auf ein Minimum beschränkt bleibt, was durchaus im Interesse eines stabilen Betriebes ist. Selbstverständlich kann das Betriebsverfahren es auch vorsehen, die Relativleistung generell innerhalb eines bestimmten Zielbereiches zu halten. Wenn das Betriebskonzept der Gasturbogruppe es vorsieht, die Gasturbogruppe durch die Regelung einer verstellbaren Vorleitreihe - und gegebenenfalls auch weiterer verstellbarer Verdichterleitreihen - die Turbineneintrittstemperatur oder die Turbineneintrittstemperaturen auf einem bestimmten Wert, beispielsweise dem zulässigen Maximalwert, zu halten, kann als weiteres Kriterium für einen Regeleingriff herangezogen werden, dass die Vorleitreihe sich in der vollständig geschlossenen Position befindet, und die Turbineneintrittstemperatur unter den maximal zulässigen Wert absinkt. Es ist unter dieser Voraussetzung sinnvoll, auch dann einen Regeleingriff vorzunehmen, wenn die Leistung noch innerhalb des Totbandes liegt, und die Kühlungsleistung zu vermindern. Auf diese Weise wird der Ausbrand hoch und die Emission an Kohlenmonoxid und unverbrannten Kohlenwasserstoffen niedrig gehalten.

In einer Ausführungsform des erfindungsgemässen Verfahrens wird bei einer Veränderung der Soll-Nutzleistung die Leistung bei zunächst im wesentlichen konstanter Kühlungsleistung verändert, welche Veränderung sehr schnell erfolgen kann. Dabei verändert sich selbstverständlich auch die Relativleistung und die gegen die Volllastleistung vorgehaltene Reserveleistung. Bei einer Abweichung vom jeweils gemäss den oben gemachten Ausführungen vorgegebenen Zielwert oder bei einem Verlassen eines Zielbereiches, beispielsweise bei einer Abweichung von einem vorgegebenen Relativleistungs-Zielwert oder beim Unterschreiten eines Mindestabstandes der Ist-Leistung zur Vollast-Leistung, wird die Regelung der Kühlungsleistung aktiv. Wenn zum Beispiel die Relativleistung nach oben vom Zielwert abweicht und ausserhalb eines zulässigen Bereiches liegt, wird beispielsweise die vor dem Verdichter eingespritzte Wassermenge erhöht. Aufgrund der derart erhöhten Kühlungsleistung steigt die Volllast-Leistung; damit sinkt bei gleichbleibender Nutzleistung die Ist-Relativleistung, und der Betriebspunkt der Gasturbogruppe kann wieder auf die Soll-Relativleistung eingeregelt werden. Häufig laufen die Vorgänge nicht in einer zeitlichen Abfolge ab, sondern die Regelung der Kühlungsleistung beginnt bereits einzusetzen, während die Nutzleistung noch verstellt und auf einen Sollwert eingeregelt wird. Die Veränderung der Vollast-Leistung erfolgt dann gleichzeitig, aber mit einem geringeren Gradienten, derart, dass der Wert beispielsweise als Führungsgrösse herangezogenen Relativleistung zunächst steigt und erst im Nachgang wieder stationär auf einen Sollwert geregelt wird. Der beschriebene Vorgang wird erfindungsgemäss selbstverständlich analog auf eine Abweichung von anderen vorgegebenen Sollwerten, wie Turbineneintrittstemperatur, Vorleitreihenstellung, und so weiter, angewendet. Analoges gilt natürlich auch bei einer Verminderung der Soll-Nutzleistting; in diesem Falle wird die Kühlungsleistung vermindert, um den Soll-Betriebszustand wieder herzustellen. Die Veränderung der Vollast-Leistung kann dabei wesentlich langsamer erfolgen, als die Änderung der Ist-Leistung, weil diese ja beim Betrieb nach dem erfindungsgemässen Verfahren stets bei der Ausgangs-Volllastleistung Freiheiten sowohl zu niedrigerer Leistung als auch zu höherer Leistung hat. Die Ist-Leistung kann dabei schnell genug verändert werden, um transiente Leistungsanforderungen, wie sie bei Über- oder Unterfrequenz auftreten, zu erfüllen. Die variable Kühlungsleistung wird verwendet, um wieder den Ausgangs-Betriebszustand herzustellen. Dies kann vergleichsweise langsam erfolgen; beispielsweise wird die Ist-Leistung im Sekundenbereich verändert, die Soll-Leistung im Minutenbereich. Damit wird der oben beschriebenen vergleichsweise verzögerten Reaktion und der Reaktionszeiten der Regelstrecke Rechnung getragen.

Zusammenfassend ist nochmals festzuhalten, dass der Kern der Erfindung darin besteht, eine Gasturbogruppe mit variabler Kühlung des angesaugten oder teilverdichteten Arbeitsmittels zu betreiben; vorzugsweise durch die Einspritzung einer Flüssigkeit, insbesondere Wasser, vor dem Verdichter, in den Verdichter, oder zwischen zwei Verdichterstufen, und dabei die Kühlungsleistung derart einzustellen, dass der Betriebszustand bei einer jeweiligen Ist-Leistungsabgabe der Gasturbogruppe jeweils zwar nahe dem Vollast-Betriebspunkt der Gasturbogruppe liegt, was beispielsweise günstige Emissionswerte und eine guten Wirkungsgrad gewährleistet, aber auch immer unterhalb der Vollast-Leistung, wodurch eine schnell mobilisierbare Leistungsreserve zur Verfügung gestellt wird, welche deutlich schneller mobilisiert werden kann, als wenn sie erst durch die variable Kühlung bereitgestelltwerden müsste. Dabei können als Führungsgrösse der Regelung unterschiedliche Betriebsgrössen der Gasturbogruppe herangezogen werden, welche den Betriebspunkt der Gasturbogruppe, relativ zum Vollast-Betriebspunkt charakterisieren. Insbesondere sind als geeignete Führungsgrössen die Relativleistung zu nennen, welche jeweils als die aktuelle Nutzleistung bezogen auf die aktuelle, von der Kühlungsleistung abhängige, Vollast-Nutzleistung, definiert ist, weiterhin eine Leistungsreserve von der Nutzleistung zur jeweiligen Vollast-Leistung, eine Turbinen-Eintrittstemperatur, oder eine Stellung einer verstellbaren Verdichter-Leitreihe, insbesondere einer verstellbaren Vorleitreihe. Die Kühlungsleistung wird dabei jeweils so eingeregelt, dass die Führungsgrösse auf einen Sollwert oder innerhalb eines Zielbereiches eingestellt wird. Bei der Regelung auf einen Zielwert wird mit Vorteil ein Totband um den Sollwert definiert, innerhalb dessen die Regelung deaktiviert ist, um ein übernervöses Eingreifen der Regelung bei kleinsten Abweichungen zu verhindern.

Weitere vorteilhafte Ausführungsformen der Erfindung erschliessen sich dem Fachmann im Lichte der Unteransprüche und der nachfolgend beschriebenen Ausführungsbeispiele.

### Kurze Beschreibung der Zeichnung

Die Erfindung wird nachfolgend anhand von in der Zeichnung illustrierten Ausführungsbeispielen näher erläutert. Im einzelnen zeigen
Figur 1 ein erstes Beispiel für eine erfindungsgemäss betriebene Gasturbogruppe;
Figur 2 ein Beispiel für den Verlauf massgeblicher Betriebsparameter der Gasturbogruppe aus Figur 1 bei Anwendung des erfindungsgemässen Verfahrens; und
Figur 3 eine weitere erfindungsgemäss betriebene Gasturbogruppe.

Für das Verständnis der Erfindung nicht unmittelbar notwendige Elemente sind weggelassen. Die Ausführungsbeispiele sind rein instruktiv zu verstehen, und sollen nicht zu einer Einschränkung der in den Ansprüchen gekennzeichneten Erfindung herangezogen werden.

### Weg zur Ausführung der Erfindung

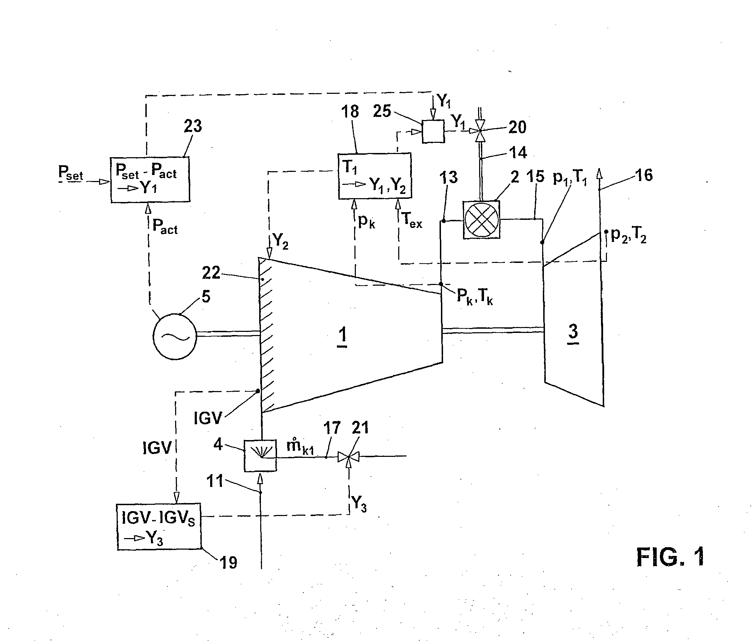

Bei der in Figur 1 dargestellten Gasturbogruppe wird ein Arbeitsmittelstrom, vorliegend ein Ansaugluftstrom 11, in einem Verdichter 1 auf einen Druck pₖ verdichtet, und dabei auf die Temperatur Tₖ erwärmt. Die verdichtete Luft 13 strömt in die Brennkammer 2 ein. Dort wird der verdichteten Luft 13 eine von einem Brennstoffmengen-Stellorgan zugemessene Brennstoffmenge 14 beigemischt und in der Luft verbrannt. Das gespannte heisse Rauchgas 15 strömt mit dem Druck p₁ und der Turbineneintrittstemperatur T₁ in die Turbine 3 ein. Der Druck p₁ entspricht im Wesentlichen dem Verdichterenddruck pₖ, vermindert um Brennkammerdruckverluste. In der Turbine 3 wird das gespannte Rauchgas 15 auf einen Druck pₑₓ entspannt Dieser entspricht im Wesentlichen dem Umgebungsdruck. Bei der Entspannung wird in der Turbine Arbeit geleistet. Das Abgas 16 strömt mit einer Temperatur Tₑₓ ab, und kann auf an sich bekannte Weise beispielsweise in einem Abhitzedampferzeuger genutzt werden. Die Turbine 3 treibt den auf einer Welle angeordneten Verdichter 1 und einen Generator 5 an. Der Generator 5 erzeugt eine elektrische Nutzleistung P_{ACT}. Diese wird in einem Regler 23 mit einem Leistungssollwert P_{SET} vergleichen, und aus der Regelabweichung wird eine Stellgrösse Y₁ für das Brennstoffstellorgan 20 gebildet, dergestalt, dass in Abhängigkeit von der Regelabweichung der Leistung die Brennsoffmenge erhöht oder vermindert wird. Die Turbineneintrittstemperatur wird im allgemeinen nicht unmittelbar gemessen, sondern auf dem Fachmann geläufige Weise beispielsweise als Funktion der Tubinenaustrittstemperatur und des Verdichterendrucks berechnet. Dies erfolgt im Beispiel in einem Regler 18, welcher die Turbineneintrittstemperatur T₁ auf einen Maximalwert begrenzt. Wenn die Turbineneintrittstemperatur einen zulässigen Maximalwert erreicht hat, greift der Regler 18 über die Stellgrösse Y₂ auf die Stellung IGV einer verstellbaren Vorleitreihe 22 ein, welche im Wesentlichen den vom Verdichter 1 angesaugten Luftvolumenström bestimmt. Bei Erreichen der zulässigen Turbineneintrittstemperatur öffnet der Regler 18 die verstellbare Vorleitreihe 22 weiter. Damit steigt der Ansaugvolumenstrom und damit bei gleichbleibender Dichte der Ansaugluft der Massenstrom. Daher kann bei gleichbleibender Turbineneintrittstemperatur mehr Brennstoff 14 gefeuert werden, und die Nutzleistung steigt. Wenn die Vorleitreihe vollständig geöffnet ist, begrenzt der Regler 18 die Brennstoffmenge. Es ist dann die Vorleitreihe maximal geöffnet, und die Turbineneintrittstemperatur ist maximal; dies ist der Vollastbetriebspunkt der Gasturbogruppe, die in diesem Betrieb abgegebene Leistung wird in diesem Rahmen als die Grund-Vollastleistung bezeichnet. Weiterhin kann in einer Einspritzvorrichtung 4 eine Flüssigkeit 17 in den Ansaugluftstrom 11 eingespritzt werden. Durch die Verdunstung der Flüssigkeit vor dem Verdichter steigt bei gleichbleibendem Ansaugvolumenstrom der Arbeitsmittelmassenstrom. Wenn Tropfen in den Verdichter 1 eindringen, verdunsten diese während der Verdichtung; dies reduziert die Leistungsaufnahme des Verdichters 1 und vermindert die Verdichterendtemperatur T_{K}. Aufgrund des gestiegenen Massenstroms und der gesunkenen Verdichterendtemperatur kann nunmehr bei gleichbleibender Turbineneintrittstemperatur stärker gefeuert werden. In Verbindung mit der geringeren Leistungsaufnahme des Verdichters steigt die zum Antrieb des Generators zu Verfügung stehende Leistung signifikant. Die Volllast-Leistung steigt also signifikant im Verhältnis zur Grund-Volllastleistung. Umgekehrt wird bei gleichbleibender Ist-Nutzleistung P_{ACT} die Ist-Relativleistung als Verhältnis der Ist-Nutzleistung zur Volllastleistung kleiner. Das heisst, dass bei im Wesentlichen gleichbleibender oder sogar leicht sinkender Brennstoffmenge zunächst die Turbineneintrittstemperatur sinkt. Gemäss dem oben beschriebenen Regelkonzept greift hierbei der Regler 18 ein und schliesst die Vorleitreihe 22 etwas, wobei die Turbineneintrittstemperatur auf dem Maximalwert gehalten wird. Die Gasturbogruppe reagiert vergleichsweise träge auf die Einspritzung der Flüssigkeit vor dem Verdichter. Schnelle Leistungsänderungen, wie sie zum Abfangen von Überfrequenzen oder Unterfrequenzen erforderlich sind, können nur beschränkt durch Änderungen die Kühlungsleistung realisiert werden. Eine variable Kühlung durch Wärmetauscher, beispielsweise als Verdichter-Zwischenkühlung, reagiert dabei tendenziell träger als die Eingriffe auf die eingespritze Flüssigkeitsmenge. Gemäss der Erfindung wird daher die Gasturbogruppe eben, wenigstens solange die Kühlung des Arbeitsmittels vor oder im Verdichter noch Reserven bereithält, nicht unter Volllastbedingungen betrieben, sondern bei einer vorgegebenen Nutzleistung, welche beispielsweise grösser als die Grund-Volllastleistung ist, wird die Kühlung so betrieben, dass die aktuelle Volllastleistung mit Kühlung grösser ist als die Ist-Nutzleistung. Damit besteht eine Reserve, um die Ist-Leistung schnell weiter zu erhöhen. Im dargestellten Beispiel wird soviel Wasser 17 vor dem Verdichter eingespritzt, dass die Volllastleistung grösser als die Ist-Nutzleistung P_{ACT} und die Soll-Nutzleistung P_{SET} ist, derart, dass der Regler 18 nicht in der Begrenzung für die Brennstoffmengen-Stellgrösse arbeitet Im vorliegenden Beispiel wird die Vorleitreihenstellung IGV als Führungsgrösse für die Wassermenge ṁ_{K} herangezogen. Mittels einer Veränderung der Einspritzwassermenge und damit der Kühlungsleistung wird die Stellung IGV der Vorleitreihe 22 auf einen Sollwert IGVₛ eingeregelt, bei welchem die Vorleitreihe nicht vollständig geöffnet ist. Regler 19 bildet aus der Soll-Istwert-Abweichung der Vorleitreihenstellung eine Stellgrösse Y₃ für die Einspritzmenge ṁ_{K}, welche durch das Stellorgan 21 eingestellt wird. Selbstverständlich können auch andere Betriebskenngrössen als Führungsgrösse herangezogen werden, jedoch ist die Vorleitreihenstellung besonders leicht zugänglich, und im relevanten Leistungsbereich besteht eine hohe Korrelation zwischen der Vorleitreihenstellung und der Relativleistung.

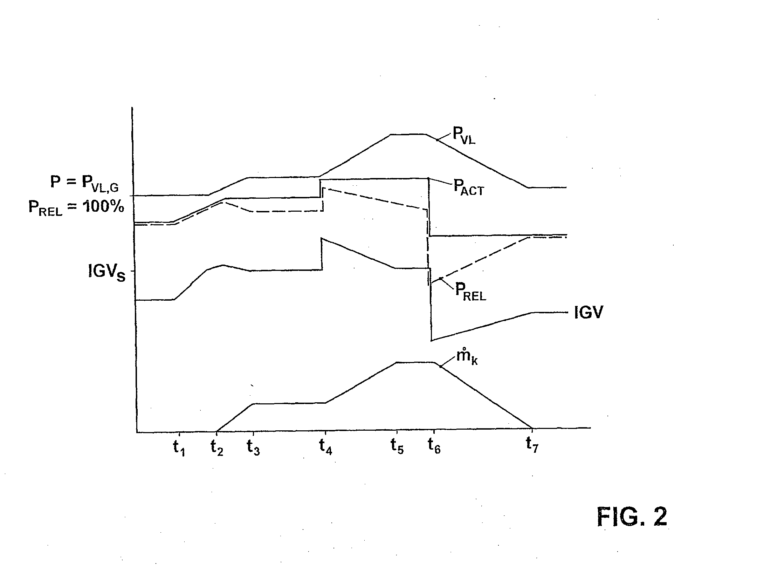

Die Figur 2 stellt beispielhafte Verläufe einiger Grössen der Gasturbogruppe aus Figur 1 schematisch dar. Dargestellt ist der Verlauf der Vollast-Leistung P_{VL}, der Ist-Leistung P_{ACT}, der Ist-Relativleistung P_{REL}, der Vorleitreihenposition IGV, sowie der eingespritzten Flüssigkeitsmenge ṁ_{K} über der Zeit. Auf der senkrechten Achse ist die Grund-Vollastleistung P_{VL,G}, 100% Relativleistung, sowie der Sollwert der Führungsgrösse für die Kühlungsleistung, die Soll-Vorleitreihenstellung IGV_{S}, gekennzeichnet. Zu Beginn liegt die Ist-Leistung recht weit unter der Vollast-Leistung. Die Position der Vorleitreihe liegt noch unterhalb des Sollwertes, die Vorleitreihe ist als noch weit geschlossen, und der Wassermassenstrom ṁ_{K} ist noch Null; daher ist der Regelkreis für die Kühlungsleistung, also den eingespritzten Wassermassenstrom, noch nicht aktiv. Die Vollastleistung P_{VL} ist gleich der Grund-Volllastleistung P_{VL,G}. Bei einer Erhöhung der Ist-Leistung wird die Vorleitreihe geöffnet; der Einspritzmassenstrom bleibt zunächst Null und die Volllastleistung bleibt entsprechend konstant. Wenn die Öffnung der Vorleitreihe den Sollwert überschreitet, wird die Regelung für die Wassereinspritzung aktiv, und der Wassermassenstrom ṁ_{K} steigt. Wie oben beschrieben, wirkt sich dieses auf die Turbineneintrittstemperatur aus, und die Vorleitreihe öffnet mit weiter steigender Leistung mit einem vergleichsweise geringeren Gradienten. Wenn die Ist-Leistung konstant bleibt, wird der Wassermassenstrom weiter gesteigert, bis die Vorleitreihenstellung auf den Sollwert eingeregelt ist. Durch die Kühlung der Luft stromauf des Verdichters und im Verdichter steigt mit steigendem Wassermassenstrom die Vollastleistung der Gasturbogruppe an. Entsprechend steigt zunächst die Relativleistung im Gleichgang mit der Ist-Leistung, steigt bei Aktivierung der Wassereinspritzung langsamer, und fällt dann ab. Obwohl die Ist-Leistung nahezu gleich der Grund-Vollastleistung wird, ist die Relativleistung nach Stabilisierung der Einspritzmenge deutlich unter 100%. Aufgrund der Kühlung durch das eingespritzte Wasser wird die Volllast-Leistung oberhalb der Ist-Leistung eingestellt. Die Differenz steht als schnell mobilisierbare Leistungsreserve zur Verfügung. Aufgrund einer schnellen Leistungsanforderung zum Zeitpunkt t₄, welche beispielsweise durch eine Unterfrequnez ausgelöst wird, wird die Ist-Leistung schnell erhöht, nahezu bis zur Vollast-Leistung. Entsprechend steigt die Relativleistung nahezu sprungartig auf fast 100%. Die Vorleitreihe muss fast vollständig geöffnet werden, damit die Turbineneintrittstemperatur nicht über den maximal zulässigen Wert steigt. In der Folge erhöht der in Figur 1 dargestellte Regler 19 die Wassermenge mit einem vorgegebenen Gradienten. Bei gleichbleibender Ist-Leistung steigt die Volllast-Leistung und die Relativleistung sinkt. Die Vorleitreihe wird wieder geschlossen. Wenn die Stellung der Vorleitreihe wieder den Sollwert erreicht. wird die Einspritzmenge wieder konstant gehalten, und die Gasturbogruppe arbeitet wieder im Soll-Betriebspunkt mit einer Leistungsreserve. Wenn zum Zeitpunkt t₆ die Leistung schlagartig sinkt, wird auch die Vorleitreihe schnell geschlossen; die Relativleistung sinkt mit dem Leistungs-Istwert. Entsprechend reagiert Regler 19 mit einer Verminderung des Wassermassenstroms. Die Volllastleistung sinkt, die Relativleistung steigt, und die Vorleitreihe wird wieder geöffnet. Die Wassermenge wird so lange vermindert, bis entweder die Soll-Istwertabweichung der Vorleitreihenstellung wieder ausgeregelt ist, oder bis die Wassereinspritzung vollständig deaktiviert ist, und der Regler 19 also wieder in einer Begrenzung arbeitet. Gemäss dem oben dargelegten Regelkonzept der Gasturbogruppe bleibt die Turbineneintrittstemperatur im dargestellten Relativleistungsbereich konstant, da diese durch den Regler 18 im Zusammenspiel mit der Vorleitreihenstellung konstantgehalten wird.

Es ist ohnehin eine besonders bevorzugte Ausführungsform der Erfindung, die variable Kühlung, gemäss dem Ausführungsbeispiel durch die Einspritzung von Wasser realisiert, erst bei einer möglichst hohen Turbineneintrittstemperatur zu aktivieren. Bei einer Gasturbogruppe, bei welcher die Turbineneintrittstemperatur über verstellbare Leitreihen regelbar ist, wird die Kühlung mit Vorteil erst aktiviert, wenn die Turbineneintrittstemperatur, gegebenenfalls alle Turbineneintrittstemperaturen, den Maximalwert, Volllastwert, erreicht haben. Umgekehrt wird die Kühlungsleistung dann vermindert, wenn die Turbineneintrittstemperatur unter den Vollastwert abfällt. Diese Betriebsweise stellt sicher, dass die Gasturbogruppe immer möglichst nahe an ihrem Auslegungspunkt betrieben wird, und insbesondere der Ausbrand gut ist, wodurch geringe Emissionen an unverbrannten Kohlenwasserstoffen und Kohlenmonoxid sichergestellt werden.

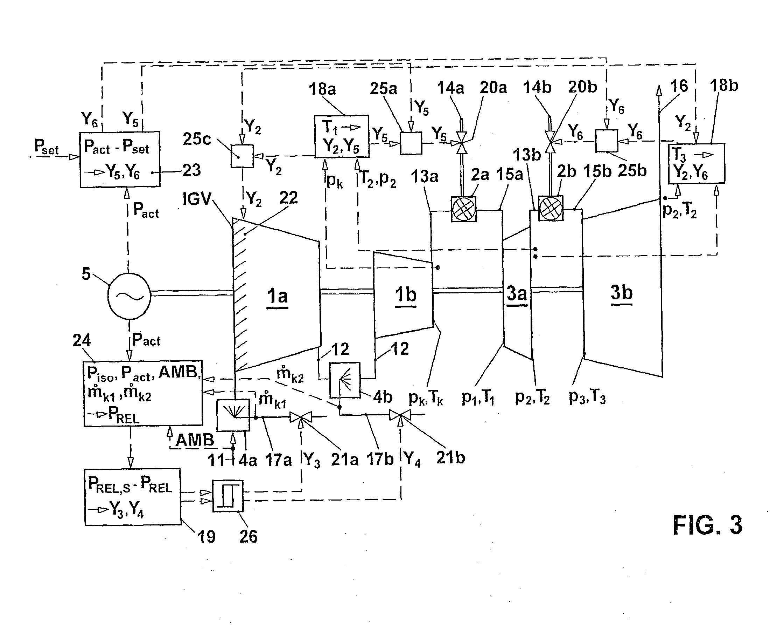

Die Figur 3 zeigt ein Beispiel für die Realisierung der Erfindung an einer sequentiell gefeuerten Gastrubogruppe der aus EP 620 362 bekannten Art. In wesentlichen Zügen erschliesst sich deren Funktion im Lichte der vorgehenden Ausführungen zur Figur 1, weshalb auf eine detaillierte Beschreibung an dieser Stelle verzichtet wird. Die Besonderheit der in Figur 3 dargestellten Gasturbogruppe ist, dass dem Arbeitsmittel zwischen zwei Entspannungsschritten wenigstens noch einmal Wärme zugeführt wird. Bei der dargestellten Gasturbogruppe wird in der verdichteten Luft 13a zunächst in einer Hochdruckbrennkammer 2a eine Brennstoffmenge 14a verbrannt. Das heisse Rauchgas 15a wird in einer Hochdruckturbine 3a teilentspannt, beispielsweise mit einem Druckverhältnis 2. Das teilentspannte Heissgas strömt mit einem Restsauerstoffgehalt von rund 15% bis 17% in eine Niederdruckbrennkammer 2b ein. Die Niederdruckbrennkammer ist inbesiondere eine selbstzündende Brennkammer des aus EP 669 500 bekannten Typs. Dort wird eine zweite Brennstoffmenge 14b zugeführt und verbrannt, und das immer noch gespannte Arbeitsmittel wird nacherhitzt, und schliesslich in der Niederdruckturbine 3b in etwa auf Umgebungsdruck entspannt. Weiterhin ist der Verdichter in zwei seriell angeordnete Teilverdichter 1a und 1b aufgeteilt, zwischen denen ein Einspritzkühler4b angeordnet ist, über den eine Flüssigkeit in das teilverdichtete Arbeitsmittel 12 eingedüst werden kann. Durch die Verdunstung der Flüssigkeit kommt es zu einer Temperaturabsenkung des teilverdichteten Arbeitsmittels 12; weiterhin dringen Flüssigkeitstropfen in den Hochdruckverdichter 1b ein, und kühlen das Arbeitsmittel während der weiteren Verdichtung. Die variable Flüssigkeitszufuhr zu den Einspritzvorrichtungen 4a und 4b wird gemäss der Erfindung genutzt, um die Volllastleistung stets oberhalb der Ist-Leistung einzuregeln, wie nachfolgend erläutert. Wie im Zusammenhang mit Figur 1 erläutert, bildet ein Regler 23 aus einer Regelabweichung P_{SET}-P_{ACT} der Leistung eine Brennstoffimengen-Stellgrösse, welche nach an anderen Orten beschriebenen und in diesem Zusammenhang nicht primär wesentlichen Kriterien in Stellgrössen Y₅ und Y₆ für die beiden Brennstoffmengen-Stellorgane 20a und 20b der beiden Brennkammern aufgeteilt wird. Des Weiteren wird aus den Druckverhältnissen über eine Turbine und die Temperatur nach der Turbine die jeweilige Turbineneintrittstemperatur berechnet, da letztere messtechnisch in der Praxis nur schwer zugänglich ist. Es wird hierbei vorausgesetzt, dass der Druckabfall über die Brennkammern im Wesenstlichen konstant sei. dergestalt, dass im Regler 18a aus dem Verdichterenddruck pₖ, sowie dem Druck und der Temperatur nach der Hochdruckturbine p₂ und T₂ die Turbineneintrittstemperatur T₁ der Hochdruckturbine 3a ermittelt wird; auf analoge und an anderen Orten ausführlich beschriebene Weise wird im Regler 18b die Turbineneintrittstemperatur T₃ der Niederdruckturbine ermittelt. In den Beiden Reglern werden aufgrund der ermittelten Turbineneintrittstemperaturen Stellgrössen Y₂ für das Stellglied der verstellbaren Vorleitreihe 22 ermittelt. Die beiden so ermitteltem Stellgrössen werden in einem Logikglied 25c miteinander verglichen, und insbesondere die grössere der beiden wird an das Stellglied weitergegeben. Weiterhin werden aus den Turbineneintrittstemperaturen Begrenzungskriterien für die Brennstoffmengen-Stellgrössen Y₅ und Y₆ ermittelt, welche greifen, wenn die jeweilige Eintrittstemperatur maximal und die Vorleitreihe bereits vollständig geöffnet ist. Diese werden in den Logikgliedern 25a und 25 b mit den Brennstoffmengen-Stellgrössen verglichen, und begrenzen gegebenenfalls die an das jeweilige Stellglied weitergeleitete Stellgrösse. In einer Rechenschaltung 24 wird aus der Grund-Vollastlesitung bei Standard-Umgebungsbedingungen der Gasturbogruppe P_{ISO} und den Umgebungsbedingungen AMB, das heisst insbesondere Temperatur, Druck, und Feuchte der Umgebungsluft, die aktuelle Grund-Volllastleistung P_{VL,G} berechnet. Diese wird weiterhin für die Kühlungsleistung korrigiert, wobei als Mass für die Kühlungsleistung die Einspritzmassenströme ṁ_{K,1} und ṁ_{K,2} herangezogen werden. Daraus resultiert die aktuelle Vollastleistung P_{VL}. Diese Umrechnungen sind dem Fachmann unter Anwendung der fluidmechanischen und thermodynamischen Zusammenhänge und in Kenntnis der speziellen Kenngrössen der Komponenten der Gasturbogruppe ohne Weiteres geläufig. Schliesslich wird die Ist-Nutzleistung P_{ACT} auf die aktuelle Vollastleistung P_{VL} bezogen, woraus sich die Relativleistung P_{REL} ergibt. Im Regler 19 werden schliesslich aus der Regelabweichung der Ist-Relativleistung P_{REL} und der Soll-Relativleistung P_{REL,S} die Stellgrössen Y₃ und Y₄ für die Flüssigkeitsmassenstrom-Stellorgane 21 a und 21 b ermittelt, welche den Massenstrom des einer Einspritzvorrichtung 4a, 4b zugeführten Wassers steuern. Die Stellgrössen werden dabei noch über ein Hystereseglied 26 geführt, welches ein Totband um den Relativleistungs-Sollwert definiert, innerhalb dessen die Regeleingriffe unterdrückt werden, was ein übernervöses Reagieren der Wassermengenregelung vermeidet. Wenn also die Relativleistung grösser ist als die Relativleistungs-Sollwert wird der Einspritzmassenstrom ṁ_{K,1} und/oder ṁ_{K,2} wenigstens einer der Einspritzvorrichtungen erhöht. Damit steigt die aktuelle Volllastleistung P_{VL}, und bei gleichbleibender Ist-Nutzleistung sinkt die Ist-Relativleistung, und nähert sich damit dem Sollwert der Relativleistung an. Umgekehrt wird der Einspritzmassenstrom vermindert, wenn die Ist-Relativleistung unterhalb der Soll-Relativleistung liegt, um die Ist-Relativleistung auf den Sollwert einzuregeln. Auf diese Weise wird die Relativleistung im stationären Betrieb auf einen Wert innerhalb eines Totbandes um einen Relativleistungs-Sollwert von bevorzugt im Bereich 90% bis 95% eingeregelt, derart, dass stets eine schnell mobilisierbare Leistungsreserve zur Verfügung steht. Aus den oben genannten Gründen ist es von Vorteil, wenn die Kühlungsleistung vermindert wird, obwohl die Relativleistung noch innerhalb des Totbandes liegt, wenn eine Turbineneintrittstemperatur unter den Maximalwert fällt. Wie deutlich erkennbar ist, ist die hier beschriebene Regelung auf einen Relativleistungs-Sollwert komplexer als die im Zusammenhang mit Figur 1 dargestellte Regelung auf einen Sollwert der Vorleitreihenstellung, ermöglicht aber, insbesondere im Zusammenhang mit sequentiell befeuerten Gasturbogruppen, eine definiertere Leistungsreserve. Der Regelablauf stellt sich analog zu dem in Figur 2 dargestellten Beispiel dar.

Anhand der vorliegenden Beschreibung und der vorstehenden Ausführungsbeispiele erhält der Fachmann einen detaillierten Einblick in die in den Ansprüchen gekennzeichnete Erfindung und es erschliessen sich ohne Weiteres auch die in den Ausführungsbeispielen nicht dargestellten, aber von den Ansprüchen umfassten, Ausführungsformen der Erfindung.

### Bezugszeichenliste

- 1: Verdichter
- 1a: erster Teilverdichter, Niederdruckverdichter
- 1b: zweiter Teilverdichter, Hochdruckverdichter
- 2: Brennkammer
- 2a: erste Brennkammer, Hochdruckbrennkammer
- 2b: zweite Brennkammer, Niederdruckbrennkammer
- 3: Turbine
- 3a: erste Turbine, Hochdruckturbine
- 3b: zweite Turbine, Niederdruckturbine
- 4, 4a, 4b: Kühlungsvorrichtung, Einspritzvorrichtung
- 5: Generator
- 11: unverdichtetes Arbeitsmittel, Ansaugluft
- 12: teilverdichtetes Arbeitsmittel
- 13, 13a: verdichtetes Arbeitsmittel
- 13b: teilentspanntes Rauchgas
- 14, 14a, 14b: Brennstoff
- 15, 15a, 15b: erhitztes Rauchgas
- 16: entspanntes Arbeitsmittel, Abgas
- 17, 17a, 17b: Kühlmittel
- 18, 18a, 18b: Temperaturregler
- 19: Regler
- 20, 20a, 20b: Brennstoffmengen-Stellglied
- 21, 21a, 21b: Kühlmittel-Stellglied
- 22: verstellbare Vorleitreihe
- 23: Leistungsregler
- 24: Rechenglied
- 25, 25a, 25b, 25c: Logikglied
- 26: Hystereseglied

- AMB: Umgebungsbedingungen (Druck, Temperatur, Feuchte)
- IGV: Position der verstellbaren Vorleitreihe
- IGVₛ: Soll-Position der verstellbaren Vorleitreihe
- ṁ_{K}, ṁ_{K,1}, ṁ_{K,2}: Flüssigkeits-Massenstrom für Kühlung
- P_{ACT}: Ist-Nutzleistung
- P_{SET}: Soll-Nutzleistung
- P_{REL}: Ist-Relativleistung
- P_{REL,S}: Soll-Relativleistung
- P_{ISO}: Volllastleistung bei Standardbedingungen
- P_{VL,G}: Grund-Volllastleistung
- P_{VL}: Aktuelle Volllastleistung, Ist-Volllastleistung
- p_{K}: Verdichterenddruck
- p₁: Druck vor erster Turbine
- p₂: Druck nach erster Turbine
- P₃: Druck vor zweiter Turbine
- Pₑₓ: Druck nach letzter Turbine
- T_{K}: Verdichterendtemperatur
- T₁: Temperatur vor erster Turbine
- T₂: Temperatur nach erster Turbine
- T₃: Temperatur vor zweiter Turbine
- Tₑₓ: Temperatur nach letzter Turbine
- Y₁: Brennstoffmengen-Stellgrösse
- Y₂: Vorleitreihen-Stellgrösse
- Y₃: Kühlungsleistungs-Stellgrösse
- Y₄: Kühlungsleistungs-Stellgrösse
- Y₅: Brennstoffmengen-Stellgrösse für Hochdruck-Brennkammer
- Y₆: Brennstoffmengen-Stellgrösse für Niederdruck-Brennkammer

## Patentansprüche

1. Verfahren zum Betrieb einer Gasturbogruppe, bei dem: ein Arbeitsmittel (11) in wenigstens einem Verdichter (1, 1a, 1b) komprimiert wird; das komprimierte Arbeitsmittel (13,13a) in wenigstens einem Bauteil zur Wärmezufuhr (2a) durch Zufuhr einer Wärmemenge auf eine Turbineneintrittstemperatur erhitzt wird; das Arbeitsmittel (15,15a,15b) in wenigstens einer Turbine (3,3a, 3b) entspannt wird; bei der Entspannung des Arbeitsmittels eine Wellenleistung erzeugt wird; wenigstens ein erster Teil der Wellenleistung zum Antrieb des Verdichters verwendet wird; und ein den ersten Teil überschreitender Teil der Wellenleistung als Nutzleistung(P_{ACT}) zum Antrieb eines Leistungsverbrauchers (5) verwendet wird, wobei die Volllast-Leistung(P_{VL}) der Gasturbogruppe durch die Kühlung des Arbeitsmittels vor oder während des Verdichtungsprozesses mit einer Kühlungsleistung verstellbar ist; und wobei die Ist-Nutzleistung (P_{ACT}) der Gasturbogruppe auf eine Soll-Nutzleistung eingeregelt wird, **dadurch gekennzeichnet, dass** die Kühlungsleistung so eingestellt wird, dass die aktuelle Volllast-Leistung(P_{VL}) grösser als die Ist-Nutzleistung (P_{ACT}) wird, dergestalt, dass die Gasturbogruppe mit einer Ist-Relativleistung(P_{REL}), bezogen auf die aktuelle Volllast-Leistung (P_{VL}), von weniger als 100% betrieben wird, und dass auf schnelle Leistungsanforderungen praktisch verzögerungsfrei unmittelbar durch eine Erhöhung der Wärmezufuhr zum verdichteten Arbeitsmittel reagiert wird.

2. Verfahren nach Anspruch 1, **dadurch gekennzeichnet, dass** die Vollast-Leistung als die Nutzleistung definiert ist, bei der wenigstens einer der Parameter Prozesstemperatur und Prozessdruck bei maximalem Eintrittsvolumenstrom des Verdichters auf einem zulässigen Maximalwert ist.

3. Verfahren nach Anspruch 1, **dadurch gekennzeichnet, dass** die Vollast-Leistung als die Nutzleistung definiert ist, bei der alle Turbineneintrittstemperaturen bei maximalem Eintrittsvolumenstrom des Verdichters einen maximal zulässigen Grenzwert erreicht haben.

4. Verfahren nach einem der Ansprüche 2 oder 3, **dadurch gekennzeichnet, dass** der Eintrittsvolumenstrom durch die Stellung (IGV) einer Verdichter-Vorleitreihe (22) bestimmt wird.

5. Verfahren nach einem der vorstehenden Ansprüche, **dadurch gekennzeichnet, dass** der Verdichter Umgebungsluft ansaugt, und die Volllast-Leistung aus einer Referenzleistung(P_{ISO}), dem Druck der Umgebungsluft, der Temperatur der Umgebungsluft, der Feuchte der Umgebungsluft, und der Kühlungsleistung berechnet wird.

6. Verfahren nach einem der vorstehenden Ansprüche, **dadurch gekennzeichnet, dass** der Verdichter Umgebungsluft ansaugt, und die Volllast-Leistung aus einer Referenzleistung(P_{ISO}), dem Druck der Ansaugluft, der Temperatur der Ansaugluft, der Feuchte derAnsaugluft, und der Kühlungsleistung berechnet wird.

7. Verfahren nach einem der vorstehenden Ansprüche, **dadurch gekennzeichnet, dass** die Kühlungsleistung derart geregelt wird, dass eine zur Beschreibung des Betriebspunktes der Gasturbogruppe relativ zu einem Volllast-Betriebspunkt geeignete Betriebskenngrösse, welche als Führungsgrösse der Regelung herangezogen wird, auf einen Zielwert oder innerhalb eines Zielbereiches eingeregelt wird.

8. Verfahren nach Anspruch 7, **dadurch gekennzeichnet, dass** die Führungsgrösse durch Variation der Kühlungsleistung im stationären Betrieb innerhalb eines Totbandes um den Zielwert gehalten wird.

9. Verfahren nach einem der Ansprüche 7 oder 8, **dadurch gekennzeichnet, dass** die Relativleistung als Führungsgrösse der Regelung herangezogen wird.

10. Verfahren nach einem der Ansprüche 7 oder 8, **dadurch gekennzeichnet, dass** ein Abstand der Ist-Nutzleistung von der aktuellen Volllast-Leistung als Führungsgrösse der Regelung herangezogen wird.

11. Verfahren nach einem der Ansprüche 7 oder 8, **dadurch gekennzeichnet, dass** die Stellung einer verstellbaren Vorleitreihe als Führungsgrösse herangezogen wird.

12. Verfahren nach einem der Ansprüche 7 oder 8, **dadurch gekennzeichnet, dass** eine Turbinen-Eintrittstemperatur als Führungsgrösse für die Regelung herangezogen wird.

13. Verfahren nach einem der Ansprüche 7 bis 12, **dadurch gekennzeichnet, dass** bei einer Veränderung der Soll-Nutzleistung die Ist-Leistung mit einem ersten Leistungsgradienten verändert wird, wobei die Führungsgrösse von ihrem Sollwert abweicht oder ihren Zielbereich verlässt, und durch eine Verstellung der Kühlungsleistung die Vollastleistung mit einem zweiten Leistungsgradienten derart verändert wird, dass die Führungsgrösse wieder auf den Zielwert oder in den Sollbereich eingeregelt wird, wobei der zweite Leistungsgradient kleiner ist als der erste Leistungsgradient.

14. Verfahren nach einem der vorstehenden Ansprüche, **dadurch gekennzeichnet, dass** die Kühiungsieistung durch die Veränderung eines vor oder während des Verdichtungsprozesses in das Arbeitsmittel eingebrachten Flüssigkeitsmassenstroms (*ṁ_{K}*, *ṁ_{K,1}*, *ṁ_{K,2}*) eingestellt wird.

15. Verfahren nach Anspruch 14, **dadurch gekennzeichnet, dass** ein an einer Einspritzvorrichtung (4,4a, 4b) eingebrachter Flüssigkeitsmassenstrom (*ṁₖ*, *ṁ*_{*k*,*1*}, *m*_{*k*,*2*}) als Mass für die Kühlungsleistung herangezogen wird.

## Claims

1. Method of operating a gas turbine group in which:
a working fluid (11) is compressed in at least one compressor (1, 1a, 1b); the compressed working fluid (13, 13a) is heated to a turbine inlet temperature in at least one component for the supply of heat (2a) by the supply of a quantity of heat; the working fluid (15, 15a, 15b) is expanded in at least one turbine (3, 3a, 3b); a shaft power is generated during the expansion of the working fluid; at least a first part of the shaft power is used for driving the compressor; and a part of the shaft power in excess of the first part is used as useful power (P_{ACT}) for driving a power consumption unit (5), the full-load power (P_{VL}) of the gas turbine group being adjustable, with a cooling power, by the cooling of the working fluid before or during the compression process; and the actual useful power (P_{ACT}) of the gas turbine group being controlled to a required useful power,
**characterized in that** the cooling power is set in such a way that the current full-load power (P_{VL}) is larger than the actual useful power (P_{ACT}), in such a way that the gas turbine group is operated with an actual relative power (P_{REL}) of less than 100% relative to the current full-load power (P_{VL}) and **in that** rapid power demands are rapidly satisfied, practically without delay, directly by increasing the heat supply to the compressed working fluid.

2. Method according to Claim 1, **characterized in that** the full-load power is defined as the useful power for which at least one of the parameters process temperature and process pressure is at a permissible maximum value at maximum inlet volume flow of the compressor.

3. Method according to Claim 1, **characterized in that** the full-load power is defined as the useful power at which all turbine inlet temperatures have reached a maximum permissible limiting value at maximum inlet volume flow of the compressor.

4. Method according to one of Claims 2 or 3, **characterized in that** the inlet volume flow is determined by the setting (IGV) of a compressor inlet guide vane row (22).

5. Method according to one of the preceding claims, **characterized in that** the compressor induces ambient air, and the full-load power is calculated from a reference power (P_{ISO}), the pressure of the ambient air, the temperature of the ambient air, the humidity of the ambient air and the cooling power.

6. Method according to one of the preceding claims, **characterized in that** the compressor induces ambient air, and the full-load power is calculated from a reference power (P_{ISO}), the pressure of the induced air, the temperature of the induced air, the humidity of the induced air and the cooling power.

7. Method according to one of the preceding claims, **characterized in that** the cooling power is controlled in such a way that an operating parameter suitable for describing the operating point of the gas turbine group relative to a full-load operating point, which operating parameter is used as the command parameter for the control system, is controlled to a target value or within a target range.

8. Method according to Claim 7, **characterized in that** the command parameter is kept, in steady-state operation, within a dead band around the target value by varying the cooling power.

9. Method according to one of Claims 7 or 8, **characterized in that** the relative power is used as the command parameter for the control system.

10. Method according to one of Claims 7 or 8, **characterized in that** a distance between the actual useful power and the current full-load power is used as the command parameter for the control system.

11. Method according to one of Claims 7 or 8, **characterized in that** the position of an adjustable inlet guide vane row is used as the command parameter.

12. Method according to one of Claims 7 or 8, **characterized in that** a turbine inlet temperature is used as the command parameter for the control system.

13. Method according to one of Claims 7 to 12, **characterized in that** in the event of a change to the required useful power, the actual power is changed with a first power gradient, the command parameter deviating from its required value or leaving its target range, and the full-load power is altered with a second power gradient by an adjustment of the cooling power in such way that the command parameter is again controlled to the target value or into the required range, the second power gradient being smaller than the first power gradient.

14. Method according to one of the preceding claims, **characterized in that** the cooling power is set by changing a mass flow of the liquid (ṁₖ, ṁ_{k,1}, ṁ_{k,2}) introduced into the working fluid before or during the compression process.

15. Method according to Claim 14, **characterized in that** a mass flow of liquid (ṁₖ, ṁ_{k,1}, ṁ_{k,2}) introduced at an injection appliance (4, 4a, 46) is used as a measure of the cooling power.

## Revendications

1. Procédé pour faire fonctionner un ensemble turbine à gaz, dans lequel : un agent actif (11) est comprimé dans au moins un compresseur (1, 1a, 1b) ; l'agent actif (13, 13a) comprimé est chauffé à une température d'entrée de turbine dans au moins un composant conduisant à l'amenée de chaleur (2a) par amenée d'une quantité de chaleur ; l'agent actif (15, 15a, 15b) est détendu dans au moins une turbine (3, 3a, 3b) ; une puissance d'actionnement d'arbre est produite lors de la détente de l'agent actif ; au moins une première partie de la puissance d'actionnement d'arbre est utilisée pour l'entraînement du compresseur ; et une partie de la puissance d'actionnement d'arbre dépassant la première partie servant de puissance utile (P_{ACT}) pour l'entraînement d'un consommateur de puissance (5), la puissance de pleine charge (P_{VL}) de l'ensemble turbine à gaz pouvant être réglée à l'aide d'une puissance de refroidissement par refroidissement de l'agent actif avant ou pendant le processus de compression ; et la puissance utile réelle (P_{ACT}) de l'ensemble turbine à gaz est réglée sur une puissance utile théorique, **caractérisé en ce que** la puissance de refroidissement est réglée de telle sorte que la puissance de pleine charge (P_{VL}) actuelle est supérieure à la puissance utile réelle (P_{ACT}), de telle sorte que l'ensemble turbine à gaz est entraîné à une puissance relative réelle (P_{REL}) inférieure, par rapport à la puissance de pleine charge (P_{VL}) actuelle, à 100% et qu'une réaction se produit directement pratiquement sans temporisation en cas de demandes de puissance rapides, par une augmentation de l'amenée de chaleur à l'agent actif comprimé.

2. Procédé selon la revendication 1, **caractérisé en ce que** la puissance de pleine charge est définie comme la puissance utile pour laquelle au moins un des paramètres de température de traitement et de pression de traitement est à une valeur maximale admise en cas de débit volumique d'entrée maximal du compresseur.

3. Procédé selon la revendication 1, **caractérisé en ce que** la puissance de pleine charge est définie comme la puissance utile pour laquelle toutes les températures d'entrée de turbine ont atteint une valeur limite maximale autorisée en cas de débit volumique d'entrée maximal du compresseur.

4. Procédé selon l'une quelconque des revendications 2 ou 3, **caractérisé en ce que** le débit volumique d'entrée est défini par la position (IGV) d'une rangée pré-directrice de compresseur (22).

5. Procédé selon l'une quelconque des revendications précédentes, **caractérisé en ce que** le compresseur aspire l'air ambiant et que la puissance de pleine charge est calculée à partir d'une puissance de référence (P_{ISO}), de la pression de l'air ambiant, de la température de l'air ambiant, de l'humidité de l'air ambiant et de la puissance de refroidissement.

6. Procédé selon l'une quelconque des revendications précédentes, **caractérisé en ce que** le compresseur aspire l'air ambiant et que la puissance de pleine charge est calculée à partir de la puissance de référence (P_{ISO}), de la pression de l'air aspiré, de la température de l'air aspiré, de l'humidité de l'air aspiré et de la puissance de refroidissement.

7. Procédé selon l'une quelconque des revendications précédentes, **caractérisé en ce que** la puissance de refroidissement est réglée de telle sorte qu'une grandeur caractéristique de fonctionnement adaptée à un point de fonctionnement de pleine charge, relative à la description du point de fonctionnement de l'ensemble turbine à gaz et servant d'ordre de grandeur de guidage du réglage est réglée à une valeur cible ou à l'intérieur d'une plage cible.

8. Procédé selon la revendication 7, **caractérisé en ce que** l'ordre de grandeur de guidage est maintenu en fonctionnement stationnaire à l'intérieur d'une bande morte entourant la valeur cible par variation de la puissance de refroidissement.

9. Procédé selon l'une quelconque des revendications 7 ou 8, **caractérisé en ce que** la puissance relative sert d'ordre de grandeur de guidage du réglage.

10. Procédé selon l'une quelconque des revendications 7 ou 8, **caractérisé en ce qu'**un écart entre la puissance utile réelle et la puissance de pleine charge actuelle sert d'ordre de grandeur de guidage pour le réglage.

11. Procédé selon l'une quelconque des revendications 7 ou 8, **caractérisé en ce que** la position d'une rangée pré-directrice réglable sert d'ordre de grandeur de guidage.

12. Procédé selon l'une quelconque des revendications 7 ou 8, **caractérisé en ce qu'**une température d'entrée de turbine sert d'ordre de grandeur de guidage pour le réglage.

13. Procédé selon l'une quelconque des revendications 7 à 12, **caractérisé en ce qu'**en cas de variation de la puissance utile théorique, la puissance réelle est modifiée avec un premier gradient de puissance, l'ordre de grandeur de guidage s'écartant de sa valeur théorique ou quittant sa plage cible et un réglage de la puissance de refroidissement permettant de modifier la puissance de pleine charge avec un deuxième gradient de puissance de telle sorte que l'ordre de grandeur de guidage soit de nouveau réglé à une valeur cible ou dans la plage théorique, le deuxième gradient de puissance étant inférieur au premier gradient de puissance.

14. Procédé selon l'une quelconque des revendications précédentes, **caractérisé en ce que** la puissance de refroidissement est réglée par la variation d'un débit massique de fluide (ṁ_{K}, ṁ_{K,1}, ṁ_{K,2}) appliqué dans l'agent actif avant ou pendant le processus de compression.

15. Procédé selon la revendication 14, **caractérisé en ce qu'**un débit massique de fluide (ṁ_{K}, ṁ_{K,1,} ṁ_{K,2}) appliqué au niveau d'un dispositif d'injection (4, 4a, 4b) sert de masse pour la puissance de refroidissement.
